(19) **Europäisches Patentamt**
**European Patent Office**
**Office européen des brevets**

(11) **EP 3 255 465 B1**

(12) **EUROPEAN PATENT SPECIFICATION**

(45) Date of publication and mention
of the grant of the patent:
**09.02.2022 Bulletin 2022/06**

(21) Application number: **17153646.9**

(22) Date of filing: **27.01.2017**

(51) International Patent Classification (IPC):
**G01V 3/17** *(2006.01)*     **G06Q 10/06** *(2012.01)*

(52) Cooperative Patent Classification (CPC):
**G06Q 10/06; G01V 3/17**

(54) **BURIED ASSET LOCATE DEVICE MOTION SENSING FOR QUALITY CONTROL**

VORRICHTUNG ZUM ERFASSEN VON VERGRABENEN VERMÖGENSWERTEN ZUR QUALITÄTSKONTROLLE

DÉTECTION DE MOUVEMENT DE DISPOSITIF DE LOCALISATION DE BIENS ENTERRÉS POUR UN CONTRÔLE DE QUALITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2016 US 201615144423**
**20.07.2016 US 201615215331**

(43) Date of publication of application:
**13.12.2017 Bulletin 2017/50**

(73) Proprietor: **Haddy, Alan**
**Naples FL 34109 (US)**

(72) Inventor: **Haddy, Alan**
**Naples FL 34109 (US)**

(74) Representative: **FRKelly**
**27 Clyde Road**
**Dublin D04 F838 (IE)**

(56) References cited:
**WO-A2-2010/093426     WO-A2-2010/093464**

**Description**

TECHNICAL FIELD

The technical field relates generally to the detection and identification of buried assets (i.e., underground utility lines) and, more specifically, to processes for improving the quality assurance procedure and technique of detecting and identifying buried assets.

BACKGROUND

Utility lines, such as lines for telephones, electricity distribution, natural gas, cable television, fiber optics, Internet, traffic lights, street lights, storm drains, water mains, and wastewater pipes, are often located underground. Utility lines are referred to as "buried assets" herein. Consequently, before excavation occurs in an area, especially an urban area, an excavator is typically required to clear excavation activities with the proper authorities and service providers. The clearance procedure usually requires that the excavator contact a central authority (such as "One Call", "811" and "Call Before You Dig," which are well known in the art) which, in turn, sends a notification to the appropriate utility companies. Subsequently, each utility company must perform a buried asset detection procedure, which includes having a field technician visit the proposed excavation site, detecting the relevant buried assets and physically marking the position of the buried asset using temporary paint or flags.

Usually, a field technician visiting a proposed excavation site utilizes a portable electronic device known as a pipe or cable locator, which may be a commercial, off-the-shelf, two-part receiver/transmitter kit that is employed to detect and identify the position of the buried assets. This is typically achieved by connecting the transmitter part to a suitable connection point (i.e., pedestal, hydrant, manhole, removable cover, lid, junction box or other access point) of the buried asset, wherein the transmitter sends a signal of a specific frequency onto the buried conductor. Subsequently, the receiver device is "tuned" to the specific frequency in order to locate the resulting electromagnetic signal radiating from the buried conductor, thus enabling the position and route of the buried pipe/cable to be marked with paint or flags above surface. Best practice standards require the operator perform very specific and consistent physical motions with the locator device such as sweeping, rotating and lifting, all while the device must be orientated correctly to the plane of the buried target to ensure correct geometric alignment with the radiated electromagnetic field.

The aforementioned buried asset location procedure, however, takes time and training to master. There are a variety of techniques that the field technician must learn in order to perform buried asset location procedures in a way that meets best practice standards. Often, the field technician may spend a significant amount of time at a training facility learning proper location techniques and then perform an apprenticeship afterwards. After completing the aforementioned training and apprenticeship, field technicians then commence work detecting and marking out the location of buried assets.

Once field technicians begin work detecting and identifying buried assets, however, there is little data that managers and administrators can view to determine the performance of a field technician, the quality of the locate operation or data collected by him. Managers may have access to some buried asset data (i.e., global navigation satellite system, or GNSS, points) collected by field technicians, but this data only tells part of the story. Some companies have even used geo-locational data to measure how much the field technician has travelled in a given day or during a given project. But again, this data only reveals one aspect of a field technician's productivity. As such, there is an unknown or blackout period during a typical field technician's work day when managers or administrators have no data against which to evaluate the field technician's performance, any errors in technique and the quality of operations. Consequently, there is currently no way for a manager or administrator to get a complete picture of a field technician's performance, or the quality of operations, during a buried asset locate procedure.

WO2010093426A2 describes a locate device that may include one or more environmental sensors and/or operational sensors, and the locate information may include environmental information and operational information derived from such sensors. Environmental and/or operational information may be used to control operation of the locate device, assess out-of-tolerance conditions in connection with use of the locate device, and/or provide alerts or other feedback.

Therefore, a need exists for improvements over the prior art, and more particularly for more efficient methods and systems for measuring the performance of field technicians during a buried asset locate procedure.

SUMMARY

A method and system on a locator device for measuring quality of a buried asset location procedure for quality control is provided as set out in the claims.

BRIEF DESCRIPTION OF THE DRAWINGS

The accompanying drawings, which are incorporated in and constitute a part of this disclosure, illustrate various example embodiments. In the drawings:

FIG. 1 is a diagram of an operating environment that supports a method and system for measuring quality of a buried asset location procedure for quality control and quality assurance, according to an example embodiment;

FIG. 2 is a diagram showing the data flow of the general process for measuring quality of a buried asset location procedure for quality control and quality assurance, according to an example embodiment;

FIG. 3 is a flow chart showing the control flow of the process for measuring quality of a buried asset location procedure for quality control and quality assurance, according to an example embodiment;

FIG. 4 is an illustration showing the process of logging buried asset data points, according to an example embodiment;

FIG. 5 is an illustration showing movement of a locator device in various degrees of freedom, according to an example embodiment;

FIG. 6 is a block diagram of a system including a computing device, according to an example embodiment.

DETAILED DESCRIPTION

The following detailed description refers to the accompanying drawings. Wherever possible, the same reference numbers are used in the drawings and the following description to refer to the same or similar elements. While embodiments may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the claimed subject matter. Instead, the proper scope of the claimed subject matter is defined by the appended claims.

The claimed subject matter improves over the prior art by providing a more efficient, automated and precise way of measuring the performance of a field technician during a buried asset locate procedure for quality control and quality assurance purposes. The example embodiments log a variety of data collected by a locate device during a buried asset locate procedure and then determines the performance of the field technician, based on said collected data. The example embodiments leverage the vast amount of data that can be collected during a buried asset locate procedure to assess and quantify a field technician's performance, as compared to industry standards for buried asset locate procedures and techniques. The disclosed embodiments reduce or eliminate the unknown, or blackout, period during a field technician's work day when managers or administrators have no data against which to evaluate a field technician's performance. Hence, the example embodiments provide a complete picture of a field technician's performance during a buried asset locate procedure, which may be used for quality control and quality assurance purposes

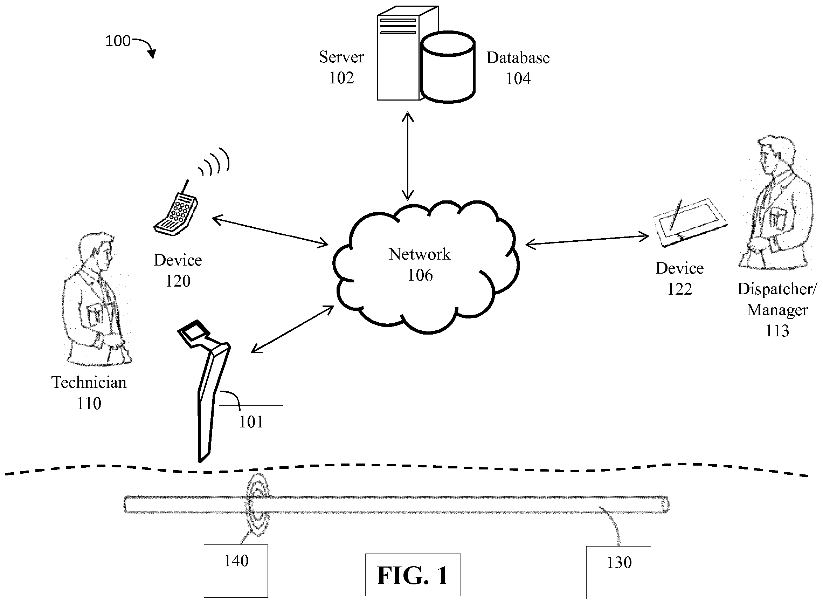

FIG. 1 is a diagram of an operating environment 100 that supports a method and system for measuring quality of a buried asset location procedure for quality control and quality assurance. The server or computing device 102 may be communicatively coupled with a communications network 106, according to an example embodiment. The environment 100 may comprise mobile computing devices 120, 122, which may communicate with computing device 102 via a communications network 106. Mobile computing devices 120, 122 may comprise a cellular/mobile telephone, smart phone, tablet computer, laptop computer, handheld computer, wearable computer, or the like. Devices 120, 122 may also comprise other computing devices such as desktop computers, workstations, servers, and game consoles, for example. The mobile computing devices 120, 122 may be connected either wirelessly or in a wired or fiber optic form to the communications network 106. Communications network 106 may be a packet switched network, such as the Internet, or any local area network, wide area network, enterprise private network, cellular network, phone network, mobile communications network, or any combination of the above.

FIG. 1 also shows a locator device 101, which detects and measures radio frequency and/or electromagnetic signals 140 emanating from a buried asset 130. In one embodiment, locator device 101 (otherwise known as an electromagnetic locator device (ELD) or simply a "locator") includes all of the functions of a conventional locator device, which is well known in the art. Locator 101 is also connected either wirelessly or in a wired or fiber optic form to the communications network 106. Locator 101 may comprise a computing device 600.

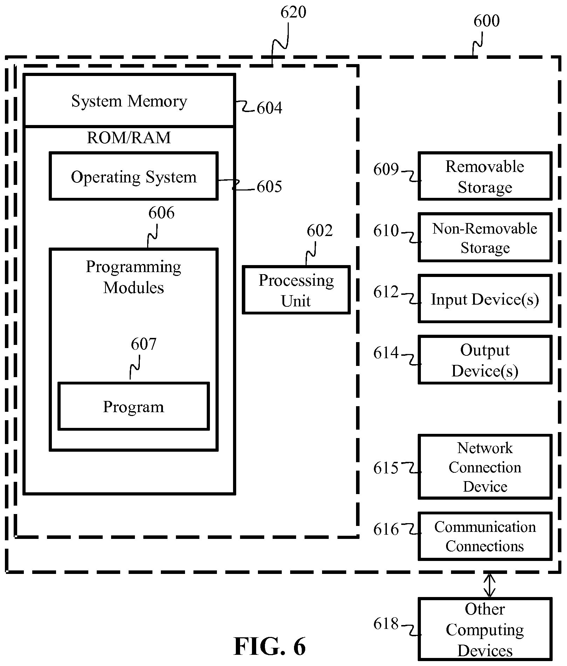

The environment 100 shows that mobile computing device 120 is operated by a technician or operator 110 (i.e., a field technician). Device 122 may also be operated by a manager or a dispatcher 113 that dispatches or provides support to a technician 110 (alternatively, the technician 110 may be the same person as technician 113). Server 102, locator 101 and devices 120, 122 may each comprise a computing device 600, described below in greater detail with respect to FIG. 6.

In another embodiment, the devices 120, 122 also calculate current geographical position (otherwise referred to as geographical location data) using an onboard processor or a connected processor. In one embodiment, the devices 120, 122 may calculate current position using a satellite or ground based positioning system, such as a Global Positioning System (GPS) system, which is a navigation device that receives satellite or land based signals for the purpose of determining the device's current geographical position on Earth. Generally, devices 120, 122 calculate global navigation satellite system (GNSS) data. A GNSS or GPS receiver, and its accompanying processor, may calculate latitude, longitude and altitude information. In this document, the terms GNSS and GPS are used generally to refer to any global navigation satellite system, such as GLONASS, GALILEO, GPS, etc. In this embodiment, a radio frequency signal is received from a satellite or ground based transmitter comprising a time the signal was transmitted and a position of the transmitter. Subsequently, the devices 120, 122 calculate current geographical location data of the device based on the signal. In another embodiment, the devices 120, 122 calculate current geographical location using alternative services, such as control plan locating, GSM localization, dead reckoning, or any combination of the aforementioned position services. The term spatial technologies or spatial processes refers generally to any processes and systems for determining one's position using radio signals received from various sources, including satellite sources, land-based sources and the like.

Computing device 102 includes a software engine that delivers applications, data, program code and other information to networked devices, such as 120, 122. The software engine of device 102 may perform other processes such as transferring multimedia data in a stream of packets that are interpreted and rendered by a software application as the packets arrive. FIG. 1 further shows that device 102 includes a database or repository 104, which may be a relational database comprising a Structured Query Language (SQL) database stored in a SQL server. Mobile computing devices 120, 122 may also include their own database, either locally or via the cloud. The database 104 may serve buried asset data, buffer zone data, portable transmitter hookup data, as well as related information, which may be used by device 102 and mobile computing devices 120, 122.

Device 102, mobile computing devices 120, 122 and locator 101 may each include program logic comprising computer source code, scripting language code or interpreted language code that perform various functions of the disclosed embodiments. In one embodiment, the aforementioned program logic may comprise program module 607 in FIG. 6. It should be noted that although FIG. 1 shows only two mobile computing devices 120, 122, one locator 101 and one device 102, the system of the disclosed embodiments supports any number of servers, locators and mobile computing devices connected via network 106. Also note that although device 102 is shown as a single and independent entity, in one embodiment, device 102 and its functionality can be realized in a centralized fashion in one computer system or in a distributed fashion wherein different elements are spread across several interconnected computer systems.

Environment 100 may be used when devices 120, 101 engage in buried asset detection activities that comprise reading, generating, and storing buried asset data and related information. Various types of data may be stored in the database 104 of device 102 (as well as data storage on devices 120, 122 and locator 101) with relation to a buried asset that has been detected and located. For example, the database 104 (or devices 120, 122 and locator 101) may store one or more records for each buried asset, and each record may include one or more buried asset data points. A buried asset data point may include a current time, a textual map address, and location data or position data, such as latitude and longitude coordinates, geographical coordinates, an altitude coordinate, or the like. A buried asset data point may also include depth measurement data, electromagnetic signal measurement data (such as electrical current measurement data, resistance measurement data, impedance measurement data, electrical signal magnitude measurement data, electrical signal frequency measurement data, electrical signal voltage measurement data, etc.), direction data and orientation data. Each record may include data for one buried asset data point.

A buried asset data point may also include a precision data value corresponding to any piece of information associated with a buried asset data point, such as the geographical coordinate or. A precision data value is a value that represents the quality or level of precision of a piece of information, such as a geographical coordinate. All sensors and devices that read physical quantities have a certain amount of measurement error or observational error. A precision data value represents the amount or magnitude of the measurement error or observational error of a sensor or device at one time. In one embodiment, a precision data value is a numerical value, such as a real number from 0 to 1.0 (with a variable number of decimal points) wherein zero represents perfect precision, .5 represents a precision that is 50% off from a true value, .75 represents a precision that is 75% off from a true value, etc. In another embodiment, a precision data value is an alphanumeric value (such as a word or other ASCII string) that corresponds (according to a lookup table or other correspondence table) to a predefined amount of precision. In another embodiment, a precision data value is any set of values that may be sorted according to ascending or descending value. Thus, in this embodiment, precision data values may have ascending and descending values.

In one embodiment, the precision data value is inversely proportional to the level of precision of quality of a piece of information, such as a geographical coordinate. Thus, when there is a large margin of error or a low confidence level in a piece of information, then the precision data value is high and the quality or level of precision of the information is low. Conversely, when there is a small margin of error or a high confidence level in a piece of information, then the precision data value is low and the quality or level of precision of the information is high.

With regard to geographical coordinates, HDOP, VDOP, PDOP, and TDOP values (Horizontal, Vertical, Positional and Time Dilution of Precision, respectively) are precision data values well known in the art for representing the quality or level of precision of a geographical coordinate. Also with regard to geographical coordinates, values representing the quality or level of precision of a geographical coordinate may rely on whether a differential correction technique (such as differential GPS) was used in calculating the coordinate.

The Differential Global Positioning System (DGPS) is an enhancement to Global Positioning System that provides improved location accuracy. DGPS uses a network of fixed, ground-based reference stations to broadcast the difference between the positions indicated by the satellite systems and the known fixed positions. As such, if DGPS was used to calculate a geographical coordinate, then the precision data value of the coordinate may reflect that fact. For example, the precision data value may indicate higher accuracy if DGPS was used.

In one embodiment, Precise Point Positioning (PPP) is used to generate a precision data value representing the quality or level of precision of a geographical coordinate. PPP is a global navigation satellite system positioning method to calculate precise positions up to few centimeter level using a single receiver in a dynamic and global reference framework. The PPP method combines precise clocks and orbits calculated from a global network to calculate a precise position with a single receiver.

A buried asset data point may also include a precision data value corresponding to any piece of information associated with a buried asset data point, such as a current time, a textual map address, depth measurement data, electrical signal measurement data (such as electrical current measurement data, signal strength data, resistance measurement data, impedance measurement data, electrical signal magnitude measurement data, electrical signal frequency measurement data, electrical signal voltage measurement data, electromagnetic vector data, horizontal EM field (peak), vertical EM field (null), etc.), direction data (left or right indicators that direct the technician to the location of the buried asset), orientation data, and location data or position data, such as latitude and longitude coordinates, geographical coordinates, an altitude coordinate, or the like.

Database 104 may also include a plurality of locate performance records. A locate performance record comprises real time sensor and data fusion derived from multiple sensors and inputs that enable inertial motion capture, electromagnetic locate signal analysis, GNSS data, and mode configuration data, among other things. Database 104 includes one or more a lookup tables that define a correspondence between each one of a plurality of component values of a performance record and one of a plurality of performance measurements of a buried asset location procedure performed by a field technician. Said lookup tables may represent industry standards for buried asset location procedure and technique. I.e., said lookup tables may represent a benchmark against which a locate technician's performance can be compared. A performance measurement may be a graduating or continuous numerical scale, such as from 1 to 10, wherein 1 is considered low performance and 10 is considered excellent performance. A performance measurement may also be a set of words, for example, wherein the word BAD is considered low performance and the word GOOD is considered excellent performance. Note that in this description, any of the data described as stored in database 104 may also be stored in devices 120 and/or 101.

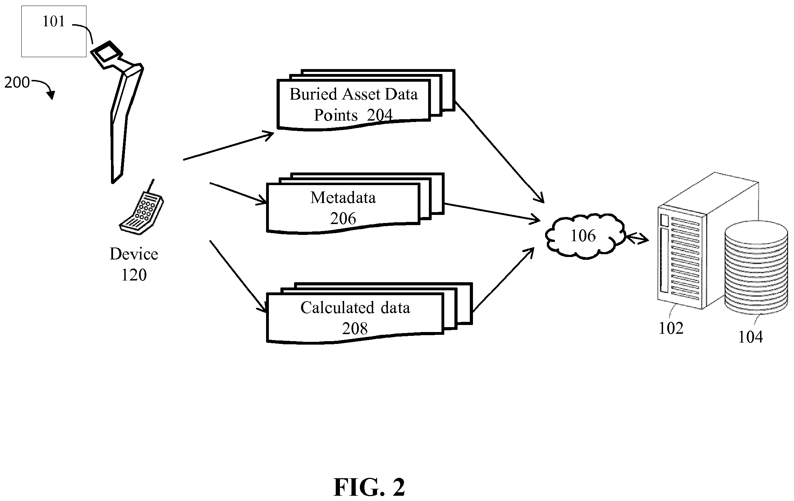

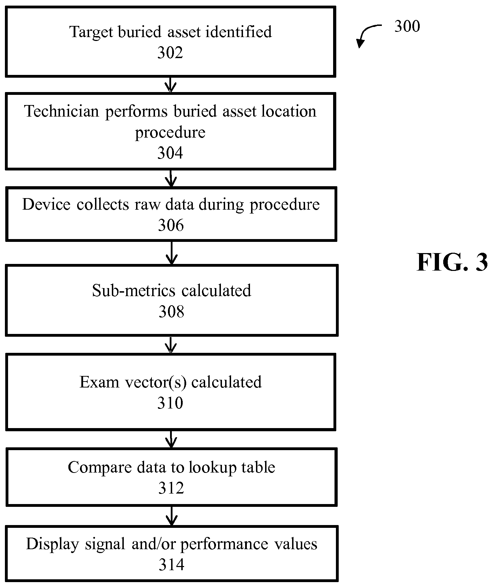

FIG. 3 is a flow chart showing the control flow of the process 300 for measuring quality of a buried asset location procedure for quality control and quality assurance, according to an example embodiment. Process 300 describes the steps that begin to occur when the locate technician 110 detects and identifies a particular target buried asset 130 that may be located within an area including multiple buried assets. The process 300 is described with reference to Figure 2, which shows the general data flow 200 of the process 300.

Prior to the beginning of the process 300, it is assumed that stored in database 104 is one or more lookup tables, as described above.

Process 300 starts in earnest with step 302 wherein a target buried asset 130, which is the buried asset the technician 110 is seeking, is identified to the technician 110 and/or the server 102. In one embodiment, this step is accomplished when the device 102 receives a work ticket specifying that a buried asset locate procedure must be performed at a particular location for a particular buried asset identified by a unique identifier, type of buried asset, expected reading for buried asset, or the like. In another embodiment, this step is accomplished by the server 102 receiving a command from the technician 110, wherein the device 120 sends a unique identifier for the target buried asset 130 to the server 102 via network 106. Step 302 may be performed while the technician 110 is located on site in the vicinity of the target buried asset, while the technician is at work or headquarters, while the technician is at home, on the road, or at any other location. In another embodiment, step 302 may be performed automatically when the technician 110 arrives at the vicinity of the target buried asset, the device 120 sends its current geographical location to the device 102 and the device 102 determines which buried assets are located at said location.

In step 304, the technician 110 performs a buried asset location procedure using his locator 101/device 120 and generates buried asset data and/or buried asset data points 204, which may be stored locally on 101/120 and also uploaded to the device 102 via network 106. The device 101 may utilize an antenna array to read raw analog signals 140 emanating from the target buried asset 130. Based on the data it has received and calculated, device 101 calculates one or more buried asset data points 204 for the target buried asset. Upon generating the buried asset data points, the technician may place physical markings on the ground corresponding to each point, such as a flag, a paint mark or a combination of the two. The device 102 receives the buried asset data and/or buried asset data points 204 and creates records in the database 104 to hold said data.

In step 306, the locator 101/device 120 collects the following raw data produced by the locator 101/device 120 as a result of performance of the buried asset location procedure by the field technician 110: 1) motion data from an accelerometer and a gyroscope in the locator 101/device 120, and wherein said motion data includes motion in three dimensions, and wherein said motion data is produced as a result of movement of the locator 101/device 120 by the field technician during performance of the buried asset location procedure (may also be garnered from rotation or tilt sensor), 2) electromagnetic data from one or more electromagnetic sensors in the locator 101/device 120, wherein said electromagnetic data includes current and depth measurements, as well as device gain and full scale deflection data, and wherein said electromagnetic data is produced as a result of movement of the locator 101/device 120 by the field technician during performance of the buried asset location procedure, 3) a mode of the locator 101/device 120, wherein the mode includes a frequency mode of the locator 101/device 120, and wherein the mode is set by the field technician during performance of the buried asset location procedure, and 4) position data of the locator 101/device 120 from a global navigation satellite system receiver in the locator 101/device 120.

Motion data may include the detection and logging of various vectors in all degrees of motion, velocity and acceleration of the ELD. Electromagnetic data may include electrical current measurement data, resistance measurement data, impedance measurement data, electrical signal magnitude measurement data, electrical signal frequency measurement data, electrical signal voltage measurement data, etc. The electromagnetic data produced by the ELD may be displayed in the ELD, wherein motion data (leading up to the logging of the electromagnetic data) from the accelerometer and gyroscope in the ELD is stored, such that said motion data may be evaluated to determine proper performance and procedure of the buried asset location procedure leading up to the logging of the electromagnetic data.

A mode of the ELD may include any one of a variety of modes (that are well-known in the art) in which a locator device may be placed. With regard to mode of the locator 101/device 120, each pipe/cable locator device 101 has various modes that the field technician selects depending on type of utility, type of environment, etc. These device mode selections include frequency selections to match transmitter selection, peak signal mode, null signal mode, peak and null signal modes simultaneously, line versus sonde/probe mode. Said device mode selections may define a locate device operating mode. Each pipe/cable locator device 101 may also collect electromagnetic (EM) signal response data, which indicates how the locator device is responding to the electromagnetic signals (140) it is detecting and processing, as well as signal strength, signal direction (left right of target), system gain control, phase (direction) of signal, measured depth, measured current, etc. The raw data collected in step 306 is then used at a later point to generate performance measurements that represent the technician's performance during said buried asset location procedure by the field technician 110: 1) motion data from procedure, according to industry standards.

Next, in step 308, the device 102 calculates sub-metrics based on the raw data collected in step 306. In this step, the device 102 calculates the following raw sub-metrics based on the data collected in step 306, and uses said sub-metrics as the component values of a first quantity vector:

a) an alignment of acceleration of the ELD with gravity, calculated as $mean\left(\frac{a \cdot g}{\|a\|\|g\|}\right)$,
b) magnitude of non-gravity acceleration of the ELD, calculated as $rms\left(\|a\| - \|g\|\right)$,
c) rotation of the ELD about its x-axis, calculated as $rms\left(\omega_x\right)$,
d) rotation of the ELD about its y-axis, calculated as $rms\left(\omega_y\right)$,
e) rotation of the ELD about its z-axis, calculated as $rms\left(\omega_z\right)$.

wherein $a$ may be a vector that represents acceleration, $g$ may be a vector that represents gravity, $rms$ stands for root mean squared and $mean$ stands for a statistical mean.

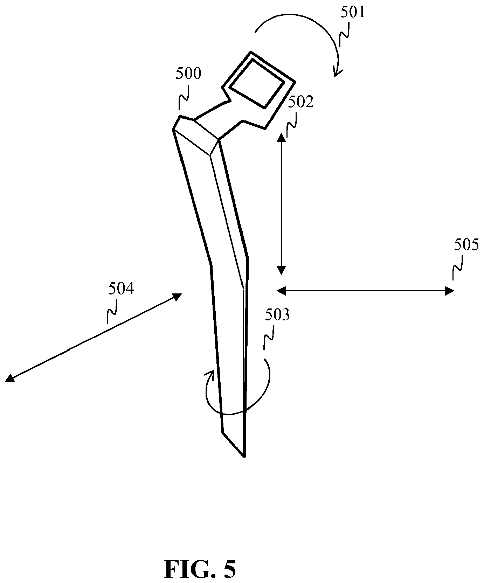

See FIG. 5 below for a description of the movement of the locator device in various degrees of freedom. Next, in step 310, the device 102 calculates component values of a first exam vector based on the quantity vector, the first exam vector composed of the following components values:

a) a score based on whether the ELD is aligned with gravity, calculated based on $mean\left(\frac{a \cdot g}{\|a\|\|g\|}\right)$,
b) a score based on magnitude of motion of the ELD, calculated based on $rms\left(\|a\| - \|g\|\right)$,
c) a score based on magnitude of rotation of the ELD about x-axis, calculated based on $rms\left(\omega_x\right)$,
d) a score based on magnitude of rotation of the ELD about y-axis, calculated based on $rms\left(\omega_y\right)$,
e) a score based on magnitude of rotation of the ELD about z-axis, calculated based on $rms\left(\omega_z\right)$,
f) a score based on whether rotation of the ELD about the z-axis is dominant calculated based on $rms\left(\omega_z\right)$, $rms\left(\omega_x\right)$ and $rms\left(\omega_y\right)$,

wherein $\omega_y$ represents rotation about the y axis, $\omega_z$ represents rotation about the z axis and $\omega_x$ represents rotation about the x axis. Each of $\omega_y$, $\omega_z$ and $\omega_x$ may be rotation vectors and each may further represent an array of data representing rotation about a specific axis. In one embodiment, a score may be a numerical value, such as the numbers 0, 1 or 2. In another embodiment, a score is based on whether the resulting value is within certain ranges. For example, if $rms\left(\omega_x\right)$ is calculated to be greater than 50 units per second, then a score of 2 is applied, if

*rms* $(\omega_z)$ is calculated to be between 18 and 50 units per second, then a score of 1 is applied, and if *rms* $(\omega_x)$ is calculated to be less than 18 units per second, then a score of 0 is applied. This paradigm may be applied to all factors a) through f) above.

In step 312, the device 101/120 accesses the lookup table, and reads a performance measurement that corresponds with each one of said plurality of component values of the first exam record, so as to read a plurality of performance measurements. The result of this step is that a plurality of performance measurements are read and stored.

Alternatively, in step 312, the device 101/120 accesses the lookup table, and reads a performance measurement that corresponds with each one of said plurality of component values of the performance record of the field technician 110, so as to read a plurality of performance measurements.

In step 314, the device 101/120 executes a visual or audio signal, if one or more of said plurality of performance measurements are below a given threshold, so as to notify the first field technician that performance of the buried asset location procedure by the first field technician is below said threshold. Also, the device 101/120 may display the plurality of performance measurements, which indicates performance of the buried asset location procedure and technique of the first field technician according to said industry standards embedded in the lookup table. In an optional final step, the device 101/120 uploads to server 102, via network 106, all of the data it has collected and calculated in steps 304 through 312.

The initial data collected in step 306 and the data calculated in steps 308-312 comprise the quality control aspect of the claimed subject matter. Quality control is a process by which entities review the quality of all factors involved in production by the field technicians. Part of said process includes automated inspection or review of the data collected in step 306 and the data calculated in steps 308-312 to determine whether said data meets industry standards.

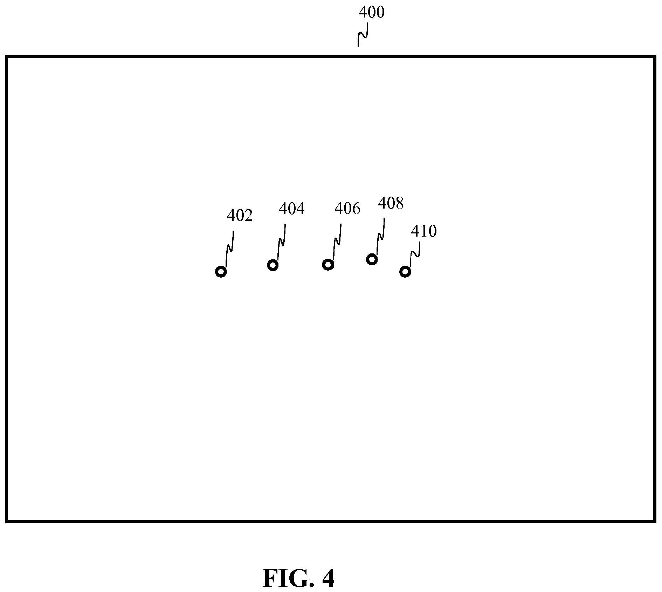

FIG. 4 is an illustration showing the process of logging buried asset data points, according to an example embodiment. FIG. 4 shows that buried asset data points 402, 404, 406, 408, 410 were logged in a geographical area represented by the two dimensional area 400.

FIG. 5 is an illustration showing movement of a locator device in various degrees of freedom, according to an example embodiment. Arrow 503 show rotation of the ELD 500 about the z-axis. Arrow 502 shows up and down movement of the ELD 500 along the z-axis. Arrow 504 shows movement of the ELD forward or backwards along the y-axis. Arrow 505 shows movement of the ELD to the sides along the x-axis. Arrow 501 shows tilting of the ELD.

FIG. 6 is a block diagram of a system including an example computing device 600 and other computing devices. Consistent with the embodiments described herein, the aforementioned actions performed by device 102, devices 120, 122, and locator 101 may be implemented in a computing device, such as the computing device 600 of FIG. 6. Any suitable combination of hardware, software, or firmware may be used to implement the computing device 600. The aforementioned system, device, and processors are examples and other systems, devices, and processors may comprise the aforementioned computing device. Furthermore, computing device 600 may comprise an operating environment for system 100 and process 300, as described above. Process 300 may operate in other environments and are not limited to computing device 600.

With reference to FIG. 6, a system consistent with an embodiment may include a plurality of computing devices, such as computing device 600. In a basic configuration, computing device 600 includes at least one processing unit 602 and a system memory 604. Depending on the configuration and type of computing device, system memory 604 may comprise, but is not limited to, volatile (e.g. random access memory (RAM)), non-volatile (e.g. read-only memory (ROM)), flash memory, or any combination or memory. System memory 604 may include operating system 605, and one or more programming modules 606. Operating system 605, for example, may be suitable for controlling computing device 600's operation. In one embodiment, programming modules 606 may include, for example, a program module 607 for executing the actions of device 102, devices 120, 122, and locator 101. Furthermore, embodiments may be practiced in conjunction with a graphics library, other operating systems, or any other application program and is not limited to any particular application or system. This basic configuration is illustrated in FIG. 6 by those components within a dashed line 620.

Computing device 600 may have additional features or functionality. For example, computing device 600 may also include additional data storage devices (removable and/or non-removable) such as, for example, magnetic disks, optical disks, or tape. Such additional storage is illustrated in FIG. 6 by a removable storage 609 and a non-removable storage 610. Computer storage media may include volatile and nonvolatile, removable and non-removable media implemented in any method or technology for storage of information, such as computer readable instructions, data structures, program modules, or other data. System memory 604, removable storage 609, and non-removable storage 610 are all computer storage media examples (i.e. memory storage.) Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by computing device 600. Any such computer storage media may be part of device 600. Computing device 600 may also have input device(s) 612 such as a keyboard, a mouse, a pen, a sound input device, a camera, a touch input device, etc. Output device(s) 614 such as a display, speakers, a printer, etc. may also be included. Computing device 600 may also include a vibration device capable of initiating a vibration in the device on command, such as a mechanical vibrator or a vibrating alert motor. The aforementioned devices are only examples, and other devices may be added or substituted.

Computing device 600 may also contain a network connection device 615 that may allow device 600 to communicate with other computing devices 618, such as over a network in a distributed computing environment, for example, an intranet or the Internet.

Device 615 may be a wired or wireless network interface controller, a network interface card, a network interface device, a network adapter or a LAN adapter. Device 615 allows for a communication connection 616 for communicating with other computing devices 618. Communication connection 616 is one example of communication media. Communication media may typically be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media. The term computer readable media as used herein may include both computer storage media and communication media.

As stated above, a number of program modules and data files may be stored in system memory 604, including operating system 605. While executing on processing unit 602, programming modules 606 (e.g. program module 607) may perform processes including, for example, one or more of the stages of the processes 200-500 as described above. The aforementioned processes are examples, and processing unit 602 may perform other processes. Other programming modules that may be used in accordance with embodiments herein may include electronic mail and contacts applications, word processing applications, spreadsheet applications, database applications, slide presentation applications, drawing or computer-aided application programs, etc.

Generally, consistent with embodiments herein, program modules may include routines, programs, components, data structures, and other types of structures that may perform particular tasks or that may implement particular abstract data types. Moreover, embodiments herein may be practiced with other computer system configurations, including hand-held devices, multiprocessor systems, microprocessor-based or programmable consumer electronics, minicomputers, mainframe computers, and the like. Embodiments herein may also be practiced in distributed computing environments where tasks are performed by remote processing devices that are linked through a communications network. In a distributed computing environment, program modules may be located in both local and remote memory storage devices.

Furthermore, embodiments herein may be practiced in an electrical circuit comprising discrete electronic elements, packaged or integrated electronic chips containing logic gates, a circuit utilizing a microprocessor, or on a single chip (such as a System on Chip) containing electronic elements or microprocessors. Embodiments herein may also be practiced using other technologies capable of performing logical operations such as, for example, AND, OR, and NOT, including but not limited to mechanical, optical, fluidic, and quantum technologies. In addition, embodiments herein may be practiced within a general purpose computer or in any other circuits or systems.

Embodiments herein, for example, are described above with reference to block diagrams and/or operational illustrations of methods, systems, and computer program products according to said embodiments. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

Furthermore, although embodiments herein have been described as being associated with data stored in memory and other storage mediums, data can also be stored on or read from other types of computer-readable media, such as secondary storage devices, like hard disks, floppy disks, or a CD-ROM, or other forms of RAM or ROM. Further, the disclosed methods' stages may be modified in any manner, including by reordering stages and/or inserting or deleting stages, without departing from the claimed subject matter.

**Claims**

1. A method for use on an electromagnetic locator device ELD (101) for classifying

    a buried asset (130) location procedure for quality control and quality assurance, the method comprising:

        a) storing a lookup table that defines a correspondence between each one of a plurality of component values and one of a plurality of performance measurements of a buried asset location procedure performed by a field technician (110);

b) reading, in real time, the following raw data produced by the ELD as a result of performance of a buried asset location procedure by a first field technician:

1) motion data from an accelerometer and a gyroscope in the ELD, wherein said motion data is produced as a result of movement of the ELD by the field technician during performance of the buried asset location procedure;

2) electromagnetic data (140) from one or more electromagnetic sensors in the ELD, wherein said electromagnetic data is produced as a result of movement of the ELD by the field technician during performance of the buried asset location procedure; and

3) an operating mode of the ELD, wherein the operating mode is set by the field technician during performance of the buried asset location procedure;

c) calculating component values of a performance record based on the raw data produced by the ELD as a result of performance of the buried asset location procedure by the first field technician and populating the performance record with said component values;

d) accessing the lookup table, and reading a performance measurement that corresponds with each one of said plurality of component values of the performance record, so as to read a plurality of performance measurements; and

e) executing a visual or audio signal on the ELD, if one or more of said plurality of performance measurements are below a given threshold, so as to notify the first field technician that performance of the buried asset location procedure by the first field technician is below said threshold; and **characterized in that**

the step of calculating component values of the performance record based on the raw data produced by the ELD further comprises:

calculating the following component values: a) an alignment of acceleration of the ELD with gravity, b) magnitude of non-gravity acceleration of the ELD, c) rotation of the ELD about its x-axis, d) rotation of the ELD about its y-axis, e) rotation of the ELD about its z-axis; and the method further comprising:

calculating component values of a first exam vector based on the raw data, the first exam vector composed of the following components values: a) a score based on whether the ELD is aligned with gravity, b) a score based on magnitude of motion of the ELD, c) a score based on magnitude of rotation of the ELD about x-axis, d) a score based on magnitude of rotation of the ELD about y-axis, e) a score based on magnitude of rotation of the ELD about z-axis, f) a score based on whether rotation of the ELD about the z-axis is dominant.

2. The method of claim 1 wherein the method further comprises transmitting said plurality of performance measurements, the performance record and the raw data to another computing device (120, 122).

3. The method of claim 1 wherein the method is executed on an embedded system on the ELD.

4. The method of claim 1 wherein said raw data produced by the ELD as a result of performance of a buried asset location procedure by the first field technician further comprises: position data of the ELD from a global navigation satellite system receiver in the ELD.

5. The method of claim 1, wherein the step of comparing the performance record further comprises: comparing the first exam vector with a plurality of exam vector records so as to find a matching exam vector record with component values that match the component values of the first exam vector.

6. The method of claim 1, wherein the step of comparing the performance record further comprises: reading a performance measurement associated with the matching exam vector record and storing said performance measurement in association with the raw data.

7. An electromagnetic locator device ELD (101) configured for classifying a buried asset location procedure for quality control and quality assurance, the ELD comprising:

a database (104) for storing a lookup table that defines a correspondence between each one of a plurality of component values and one of a plurality of performance measurements of a buried asset location procedure performed by a field technician;
a memory (604);
a processor (602) communicatively coupled with the database (104) and the memory, the processor configured for:

a) reading, in real time, the following raw data produced by the ELD as a result of performance of a buried asset location procedure by a first field technician:

1) motion data from an accelerometer and a gyroscope in the ELD, wherein said motion data is produced as a result of movement of the ELD by the field technician during performance of the buried asset location procedure;

2) electromagnetic data from one or more electromagnetic sensors in the ELD, wherein said electromagnetic data is produced as a result of movement of the ELD by the field technician during performance of the buried asset location procedure;

3) a mode of the ELD, wherein the mode is set by the field technician during performance of the buried asset location procedure; and

4) position data of the ELD from a global navigation satellite system receiver in the ELD;

b) calculating component values of a performance record based on the raw data produced by the ELD as a result of performance of the buried asset location procedure by the first field technician and populating the performance record with said component values;

c) accessing the lookup table, and reading a performance measurement that corresponds with each one of said plurality of component values of the performance record, so as to read a plurality of performance measurements; and

d) executing a visual or audio signal on the ELD, if one or more of said plurality of performance measurements are below a given threshold, so as to notify the first field technician that performance of the buried asset location procedure by the first field technician is below said threshold; and

**characterized in that**
the step of calculating component values of the performance record based on the raw data produced by the ELD further comprises:

calculating the following component values: a) an alignment of acceleration of the ELD with gravity, b) magnitude of non-gravity acceleration of the ELD, c) rotation of the ELD about its x-axis, d) rotation of the ELD about its y-axis, e) rotation of the ELD about its z-axis; and

wherein the processor is further configured for:

calculating component values of a first exam vector based on the raw data, the first exam vector composed of the following components values: a) a score based on whether the ELD is aligned with gravity, b) a score based on magnitude of motion of the ELD, c) a score based on magnitude of rotation of the ELD about x-axis, d) a score based on magnitude of

rotation of the ELD about y-axis, e) a score based on magnitude of rotation of the ELD about z-axis, f) a score based on whether rotation of the ELD about the z-axis is dominant.

**8.** The device of claim 7, wherein the device further includes a transmitter for transmitting said plurality of performance measurements, the performance record and the raw data to another computing device.

**9.** The device of claim 7 wherein the processor is located within an embedded system on the ELD.

**10.** The device of claim 7 wherein the electromagnetic data produced by the ELD includes depth and current data, wherein said depth and current data are displayed in the ELD, and wherein motion data from the accelerometer and gyroscope in the ELD is stored, such that said motion data is evaluated to determine performance of the buried asset location procedure.

**Patentansprüche**

**1.** Verfahren zur Verwendung auf einer elektromagnetischen Ortungsvorrichtung (eletromagnetic locator device - ELD) (101) zum Klassifizieren eines Ortungsvorgangs für vergrabene Vermögenswerte (130) zur Qualitätskontrolle und Qualitätssicherung, wobei das Verfahren Folgendes umfasst:

a) Speichern einer Lookup-Tabelle, die eine Entsprechung zwischen jeweils einem einer Vielzahl von Komponentenwerten und einem einer Vielzahl von Leistungsmesswerten eines durch einen Außendiensttechniker (110) durchgeführten Ortungsvorgangs für vergrabene Vermögenswerte definiert;

b) Ablesen, in Echtzeit, der folgenden Rohdaten, die durch die ELD als Ergebnis der Ableistung eines Ortungsvorgangs für vergrabene Vermögenswerte durch einen ersten Außendiensttechniker erzeugt werden:

1) Bewegungsdaten von einem Beschleunigungsmesser und einem Gyroskop in der ELD, wobei die Bewegungsdaten als Ergebnis der Bewegungen der ELD durch den Außendiensttechniker während der Ableistung des Ortungsvorgangs für vergrabene Vermögenswerte erzeugt werden;

2) elektromagnetischen Daten (140) von einem oder mehreren elektromagnetischen Sensoren in der ELD, wobei die elektromagnetischen Daten als Ergebnis der Bewegungen der ELD durch den Außendiensttechniker während der Ableistung des Ortungsvorgangs für vergrabene Vermögenswerte erzeugt werden; und

3) eines Betriebsmodus der ELD, wobei der Betriebsmodus durch den Außendiensttechniker während der Ableistung des Ortungsvorgangs für vergrabene Vermögenswerte eingestellt wird;

c) Berechnen von Komponentenwerten eines Leistungsberichts auf Grundlage der Rohdaten, die durch die ELD als Ergebnis der Ableistung des Ortungsvorgangs für vergrabene Vermögenswerte durch den ersten Außendiensttechniker erzeugt werden, und Einlesen der Komponentenwerte in den Leistungsbericht;

d) Zugreifen auf die Lookup-Tabelle und Ablesen eines Leistungsmesswerts, der einem jeweiligen der Vielzahl von Komponentenwerten des Leistungsberichts entspricht, um so eine Vielzahl von Leistungsmesswerten abzulesen; und

e) Ausführen eines optischen oder akustischen Signals auf der ELD, wenn ein oder mehrere der Vielzahl von Leistungsmesswerten unter einem vorgegebenen Schwellenwert liegen, um so den ersten Außendiensttechniker darauf aufmerksam zu machen, dass die Ableistung des Ortungsvorgangs für vergrabene Vermögenswerte durch den ersten Außendiensttechniker unter dem Schwellenwert liegt; und **dadurch gekennzeichnet, dass**

der Schritt des Berechnens von Komponentenwerten des Leistungsberichts auf Grundlage der durch die ELD erzeugten Rohdaten ferner Folgendes umfasst:

Berechnen der folgenden Komponentenwerte: a) einer Ausrichtung der Beschleunigung der ELD mit der Schwerkraft, b) eines Betrags einer nicht mit der Schwerkraft ausgerichteten Beschleunigung der ELD, c) einer Drehung der ELD um ihre x-Achse, d) einer Drehung der ELD um ihre y-Achse, e) einer Drehung der ELD um ihre z-Achse; und das Verfahren ferner Folgendes umfasst:

Berechnen von Komponentenwerten eines ersten Untersuchungsvektors auf Grundlage der Rohdaten, wobei der erste Untersuchungsvektor aus den folgenden Komponentenwerten besteht: a) einem Punktwert, der darauf beruht, ob die ELD mit der Schwerkraft ausgerichtet ist, b) einem Punktwert, der auf einem Betrag der Bewegung der ELD beruht, c) einem Punktwert, der auf einem Betrag der Drehung der ELD um die x-Achse beruht, d) einem Punktwert, der auf einem Betrag der Drehung der ELD um die y-Achse beruht, e) einem Punktwert, der auf einem Betrag der Drehung der ELD um die z-Achse beruht, f) einem Punktwert, der darauf beruht, ob eine Drehung der ELD um die z-Achse dominant ist.

2. Verfahren nach Anspruch 1, wobei das Verfahren ferner ein Übertragen der Vielzahl von Leistungsmesswerten, des Leistungsberichts und der Rohdaten an eine andere Rechenvorrichtung (120, 122) umfasst.

3. Verfahren nach Anspruch 1, wobei das Verfahren in einem eingebetteten System auf der ELD ausgeführt wird.

4. Verfahren nach Anspruch 1, wobei die Rohdaten, die durch die ELD als Ergebnis der Ableistung eines Ortungsvorgangs für vergrabene Vermögenswerte durch den ersten Außendiensttechniker erzeugt werden, ferner Folgendes umfassen: Positionsdaten der ELD von einem Empfänger für ein globales Navigationssatellitensystem in der ELD.

5. Verfahren nach Anspruch 1, wobei der Schritt des Vergleichens des Leistungsberichts ferner Folgendes umfasst: Vergleichen des ersten Untersuchungsvektors mit einer Vielzahl von Untersuchungsvektorberichten, um so einen passenden Untersuchungsvektorbericht mit Komponentenwerten, die mit den Komponentenwerten des ersten Untersuchungsvektors übereinstimmen, zu finden.

6. Verfahren nach Anspruch 1, wobei der Schritt des Vergleichens des Leistungsberichts ferner Folgendes umfasst: Ablesen eines Leistungsmesswerts, der dem passenden Untersuchungsvektorbericht zugeordnet ist, und Speichern des Leistungsmesswerts den Rohdaten zugeordnet.

7. Elektromagnetische Ortungsvorrichtung (ELD) (101), die dazu konfiguriert ist, einen Ortungsvorgang für vergrabene Vermögenswerte zur Qualitätskontrolle und Qualitätssicherung zu klassifizieren, wobei die ELD Folgendes umfasst:

eine Datenbank (104) zum Speichern einer Lookup-Tabelle, die eine Entsprechung zwischen jeweils einem einer Vielzahl von Komponentenwerten und einem einer Vielzahl von Leistungsmesswerten eines durch einen Außendiensttechniker durchgeführten Ortungsvorgangs für vergrabene Vermögenswerte definiert;
einen Speicher (604);
einen Prozessor (602), der kommunikativ mit der Datenbank (104) und dem Speicher gekoppelt ist, wobei der Prozessor für Folgendes konfiguriert ist:

a) Ablesen, in Echtzeit, der folgenden Rohdaten, die durch die ELD als Ergebnis der Ableistung eines Ortungsvorgangs für vergrabene Vermögenswerte durch einen ersten Außendiensttechniker erzeugt werden:

1) Bewegungsdaten von einem Beschleunigungsmesser und einem Gyroskop in der ELD, wobei die Bewegungsdaten als Ergebnis der Bewegungen der ELD durch den Außendiensttechniker während der Ableistung des Ortungsvorgangs für vergrabene Vermögenswerte erzeugt werden;
2) elektromagnetischen Daten von einem oder mehreren elektromagnetischen Sensoren in der ELD, wobei die elektromagnetischen Daten als Ergebnis der Bewegungen der ELD durch den Außendiensttechniker während der Ableistung des Ortungsvorgangs für vergrabene Vermögenswerte erzeugt werden;
3) eines Modus der ELD, wobei der Modus durch den Außendiensttechniker während der Ableistung des Ortungsvorgangs für vergrabene Vermögenswerte eingestellt wird; und
4) Positionsdaten der ELD von einem Empfänger für ein globales Navigationssatellitensystem in der ELD;

b) Berechnen von Komponentenwerten eines Leistungsberichts auf Grundlage der Rohdaten, die durch die ELD als Ergebnis der Ableistung des Ortungsvorgangs für vergrabene Vermögenswerte durch den ersten Außendiensttechniker erzeugt werden, und Einlesen der Komponentenwerte in den Leistungsbericht;
c) Zugreifen auf die Lookup-Tabelle und Ablesen eines Leistungsmesswerts, der einem jeweiligen der Vielzahl von Komponentenwerten des Leistungsberichts entspricht, um so eine Vielzahl von Leistungsmesswerten abzulesen; und
d) Ausführen eines optischen oder akustischen Signals auf der ELD, wenn ein oder mehrere der Vielzahl von Leistungsmesswerten unter einem vorgegebenen Schwellenwert liegen, um so den ersten Außendiensttechniker darauf aufmerksam zu machen, dass die Ableistung des Ortungsvorgangs für vergrabene Vermögenswerte durch den ersten Außendiensttechniker unter dem Schwellenwert liegt; und

**dadurch gekennzeichnet, dass** der Schritt des Berechnens von Komponentenwerten des Leistungsberichts auf Grundlage der durch die ELD erzeugten Rohdaten ferner Folgendes umfasst:

Berechnen der folgenden Komponentenwerte: a) einer Ausrichtung der Beschleunigung der ELD mit der Schwerkraft, b) eines Betrags der nicht mit der Schwerkraft ausgerichteten Beschleunigung der ELD, c) einer Drehung der ELD um ihre x-Achse, d) einer Drehung der ELD um ihre y-Achse, e) einer Drehung der ELD um ihre z-Achse; und
wobei der Prozessor ferner für Folgendes konfiguriert ist:

Berechnen von Komponentenwerten eines ersten Untersuchungsvektors auf Grundlage der Rohdaten, wobei der erste Untersuchungsvektor aus den folgenden Komponentenwerten besteht: a) einem Punktwert, der darauf beruht, ob die ELD mit der Schwerkraft ausgerichtet ist, b) einem Punktwert, der auf einem Betrag der Bewegung der ELD beruht, c) einem Punktwert, der auf einem Betrag der Drehung der ELD um die x-Achse beruht, d) einem Punktwert, der auf einem Betrag der Drehung der ELD um die y-Achse beruht, e) einem Punktwert, der auf einem Betrag der Drehung der ELD um die z-Achse beruht, f) einem Punktwert, der darauf beruht, ob die Drehung der ELD um die z-Achse dominant ist.

8. Vorrichtung nach Anspruch 7, wobei die Vorrichtung ferner einen Sender zum Übertragen der Vielzahl von Leistungsmesswerten, des Leistungsberichts und der Rohdaten an eine andere Rechenvorrichtung beinhaltet.

9. Vorrichtung nach Anspruch 7, wobei sich der Prozessor in einem eingebetteten System auf der ELD befindet.

10. Vorrichtung nach Anspruch 7, wobei die durch die ELD erzeugten elektromagnetischen Daten Tiefen- und Stromdaten beinhalten, wobei die Tiefen- und Stromdaten in der ELD angezeigt werden, und wobei die Bewegungsdaten von dem Beschleunigungsmesser und dem Gyroskop in der ELD gespeichert werden, sodass die Bewegungsdaten ausgewertet werden, um die Leistung des Ortungsvorgangs für vergrabene Vermögenswerte zu bestimmen.

**Revendications**

1. Procédé pour une utilisation sur un dispositif de localisation électromagnétique, ELD, (101) pour le classement d'une procédure de localisation de biens enterrés (130) pour le contrôle qualité et l'assurance qualité, le procédé comprenant :

   a) le stockage d'une table de consultation qui définit une correspondance entre chacune d'une pluralité de valeurs de composante et l'une d'une pluralité de mesures de réalisation d'une procédure de localisation de biens enterrés réalisée par un technicien de terrain (110) ; b) la lecture, en temps réel, de la donnée brute suivante produite par l'ELD en conséquence de la réalisation d'une procédure de localisation de biens enterrés par un premier technicien de terrain :

      1) une donnée de mouvement provenant d'un accéléromètre et d'un gyroscope dans l'ELD, dans lequel ladite donnée de mouvement est produite en conséquence d'un mouvement de l'ELD par le technicien de terrain pendant la réalisation de la procédure de localisation de biens enterrés ; 2) une donnée électromagnétique (140) provenant d'un ou de plusieurs capteurs électromagnétiques dans l'ELD, dans lequel ladite donnée électromagnétique est produite en conséquence d'un mouvement de l'ELD par le technicien de terrain pendant la réalisation de la procédure de localisation de biens enterrés ; et 3) un mode de fonctionnement de l'ELD, dans lequel le mode de fonctionnement est réglé par le technicien de terrain pendant la réalisation de la procédure de localisation de biens enterrés ;

   c) le calcul de valeurs de composante d'un enregistrement de réalisation basé sur la donnée brute produite par l'ELD en conséquence de la réalisation de la procédure de localisation de biens enterrés par le premier technicien de terrain et le peuplement de l'enregistrement de réalisation avec lesdites valeurs de composante ; d) l'accès à la table de consultation, et la lecture d'une mesure de réalisation qui correspond à chacune de ladite pluralité de valeurs de composante de l'enregistrement de réalisation, de façon à lire une pluralité de mesures de réalisation ; et e) l'exécution d'un signal visuel ou audio sur l'ELD, si l'une ou plusieurs parmi ladite pluralité de mesures de réalisation sont au-dessous d'un seuil donné, de façon à notifier le premier technicien de terrain que la réalisation de la procédure de localisation de biens enterrés par le premier technicien de terrain est au-dessous dudit seuil ; et **caractérisé en ce que**

l'étape de calcul de valeurs de composante de l'enregistrement de réalisation basées sur la donnée brute produite par l'ELD comprend en outre :

   le calcul des valeurs de composante suivantes : a) un alignement d'accélération de l'ELD avec la gravité, b) une amplitude d'une accélération non gravitationnelle de l'ELD, c) une rotation de l'ELD autour de son axe x, d) une rotation de l'ELD autour de son axe y, e) une rotation de l'ELD autour de son axe z ; et le procédé comprenant en outre : le calcul de valeurs de composante d'un premier vecteur d'examen basé sur la donnée brute, le premier vecteur d'examen étant composé des valeurs de composante suivantes : a) un score basé sur si l'ELD est aligné avec la gravité, b) un score basé sur une amplitude de mouvement de l'ELD, c) un score basé sur une amplitude de rotation de l'ELD autour de l'axe x, d) un score basé sur une amplitude de rotation de l'ELD autour de l'axe y, e) un score basé sur une amplitude de rotation de l'ELD autour de l'axe z, f) un score basé sur si une rotation de l'ELD autour de l'axe z est dominante.

2. Procédé selon la revendication 1 dans lequel le procédé comprend en outre l'émission de ladite pluralité de mesures de réalisation, de l'enregistrement de réalisation et de la donnée brute vers un autre dispositif informatique (120, 122).

3. Procédé selon la revendication 1 dans lequel le procédé est exécuté sur un système embarqué sur l'ELD.

4. Procédé selon la revendication 1 dans lequel ladite donnée brute produite par l'ELD en conséquence de la réalisation d'une procédure de localisation de biens enterrés par le premier technicien de terrain comprend en outre : une donnée de position de l'ELD provenant d'un récepteur de système mondial de navigation par satellite dans l'ELD.

5. Procédé selon la revendication 1, dans lequel l'étape de comparaison de l'enregistrement de réalisation comprend en outre : la comparaison du premier vecteur d'examen avec une pluralité d'enregistrements de vecteur d'examen de façon à identifier un enregistrement de vecteur d'examen concordant ayant des valeurs de composante qui concordent avec les valeurs de composante du premier vecteur d'examen.

6. Procédé selon la revendication 1, dans lequel l'étape de comparaison de l'enregistrement de réalisation comprend en outre : la lecture d'une mesure de réalisation associée à l'enregistrement de vecteur d'examen concordant et le stockage de ladite mesure de réalisation en association avec la donnée brute.

7. Dispositif de localisation électromagnétique, ELD, (101) configuré pour le classement d'une procédure de localisation de biens enterrés pour le contrôle qualité et l'assurance qualité, l'ELD comprenant :

une base de données (104) pour le stockage d'une table de consultation qui définit une correspondance entre chacune d'une pluralité de valeurs de composante et l'une d'une pluralité de mesures de réalisation d'une procédure de localisation de biens enterrés réalisée par un technicien de terrain ;
une mémoire (604) ;
un processeur (602) couplé en communication avec la base de données (104) et la mémoire, le processeur étant configuré pour :

a) lire, en temps réel, la donnée brute suivante produite par l'ELD en conséquence de la réalisation d'une procédure de localisation de biens enterrés par un premier technicien de terrain :

1) une donnée de mouvement provenant d'un accéléromètre et d'un gyroscope dans l'ELD, dans lequel ladite donnée de mouvement est produite en conséquence d'un mouvement de l'ELD par le technicien de terrain pendant la réalisation de la procédure de localisation de biens enterrés ;
2) une donnée électromagnétique provenant d'un ou de plusieurs capteurs électromagnétiques dans l'ELD, dans lequel ladite donnée électromagnétique est produite en conséquence d'un mouvement de l'ELD par le technicien de terrain pendant la réalisation de la procédure de localisation de biens enterrés ;
3) un mode de l'ELD, dans lequel le mode est réglé par le technicien de terrain pendant la réalisation de la procédure de localisation de biens enterrés ; et
4) une donnée de position de l'ELD provenant d'un récepteur de système mondial de navigation par satellite dans l'ELD ;

b) calculer des valeurs de composante d'un enregistrement de réalisation basé sur la donnée brute produite par l'ELD en conséquence de la réalisation de la procédure de localisation de biens enterrés par le premier technicien de terrain et peupler l'enregistrement de réalisation avec lesdites valeurs de composante ;
c) accéder à la table de consultation, et lire une mesure de réalisation qui correspond à chacune de ladite pluralité de valeurs de composante de l'enregistrement de réalisation, de façon à lire une pluralité de mesures de réalisation ; et
d) exécuter un signal visuel ou audio sur l'ELD, si l'une ou plusieurs parmi ladite pluralité de mesures de réalisation sont au-dessous d'un seuil donné, de façon à notifier le premier technicien de terrain que la réalisation de la procédure de localisation de biens enterrés par le premier technicien de terrain est au-dessous dudit seuil ; et

**caractérisé en ce que** l'étape de calcul de valeurs de composante de l'enregistrement de réalisation basées sur la donnée brute produite par l'ELD comprend en outre :

le calcul des valeurs de composante suivantes : a) un alignement d'accélération de l'ELD avec la gravité, b) une amplitude d'une accélération non gravitationnelle de l'ELD, c) une rotation de l'ELD autour de son axe x, d) une rotation de l'ELD autour de son axe y, e) une rotation de l'ELD autour de son axe z ; et
dans lequel le processeur est en outre configuré pour :

calculer des valeurs de composante d'un premier vecteur d'examen basé sur la donnée brute, le premier vecteur d'examen étant composé des valeurs de composante suivantes : a) un score basé sur si l'ELD est aligné avec la gravité, b) un score basé sur une amplitude de mouvement de l'ELD, c) un score basé sur une amplitude de rotation de l'ELD autour de l'axe x, d) un score basé sur une amplitude de rotation de l'ELD autour de l'axe y, e) un score basé sur une amplitude de rotation de l'ELD autour de l'axe z, f) un score basé sur si une rotation de l'ELD autour de l'axe z est dominante.

8. Dispositif selon la revendication 7, dans lequel le dispositif comporte en outre un émetteur pour émettre ladite pluralité de mesures de réalisation, l'enregistrement de réalisation et la donnée brute vers un autre dispositif informatique.

9. Dispositif selon la revendication 7 dans lequel le processeur est situé au sein d'un système embarqué sur l'ELD.

10. Dispositif selon la revendication 7 dans lequel la donnée électromagnétique produite par l'ELD comprend des données de profondeur et de courant, dans lequel lesdites données de profondeur et de courant sont affichées dans l'ELD, et dans lequel une donnée de mouvement provenant de l'accéléromètre et du gyroscope dans l'ELD est stockée, de sorte que ladite donnée de mouvement soit évaluée pour déterminer une réalisation de la procédure de localisation de biens enterrés.

**FIG. 1**

EP 3 255 465 B1

101

200

Device
120

Buried Asset Data
Points  204

Metadata
206

Calculated data
208

106

102          104

**FIG. 2**

```
┌─────────────────────────────────────┐        ╭─ 300
│   Target buried asset identified     │      ↙
│                302                   │
└─────────────────────────────────────┘
                  ↓
┌─────────────────────────────────────┐
│ Technician performs buried asset location │
│              procedure               │
│                304                   │
└─────────────────────────────────────┘
                  ↓
┌─────────────────────────────────────┐
│ Device collects raw data during procedure │
│                306                   │
└─────────────────────────────────────┘
                  ↓
┌─────────────────────────────────────┐
│        Sub-metrics calculated        │
│                308                   │
└─────────────────────────────────────┘
                  ↓
┌─────────────────────────────────────┐
│       Exam vector(s) calculated      │
│                310                   │
└─────────────────────────────────────┘
                  ↓
┌─────────────────────────────────────┐
│      Compare data to lookup table    │
│                312                   │
└─────────────────────────────────────┘
                  ↓
┌─────────────────────────────────────┐
│  Display signal and/or performance values │
│                314                   │
└─────────────────────────────────────┘
```

**FIG. 3**

**FIG. 4**

EP 3 255 465 B1

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2010093426 A2